# EUROPÄISCHE PATENTSCHRIFT

(11) **EP 1 557 998 B1**
(45) Veröffentlichungstag und Bekanntmachung des Hinweises auf die Patenterteilung: **21.03.2007**
(21) Anmeldenummer: 04106645.7
(22) Anmeldetag: 16.12.2004
(51) Int. Cl.: H04L 29/06

(54) **Kompressionsverfahren für einen Bytestrom in Netzwerkprotokollen**
Compression method for a bytestream in network protocols
Procédé de compression pour un flux de multiplets dans les protocoles de reseaux

(30) Priorität: 23.01.2004 DE 102004003551
(43) Veröffentlichungstag der Anmeldung: 27.07.2005
(73) Patentinhaber: SIEMENS AKTIENGESELLSCHAFT, 80333 München (DE)
(72) Erfinder: Bäse, Gero, 81371, München (DE); Kutka, Robert, 82269, Geltendorf (DE); Oertel, Norbert, 84032, Landshut (DE)

(56) Entgegenhaltungen:
- WO-A-00/49748
- WO-A-01/28180
- US-A1- 2003 007 512

## Beschreibung

Die Erfindung betrifft ein Verfahren zum Übertragen eines Bytestroms von einer Sendeeinheit an eine Empfangseinheit in einem Netzwerkprotokoll sowie korrespondierende Encoder bzw. Decoder und Sende-/Empfangseinheiten.

Bei der Übertragung von Nutzdaten über paketorientierte Kommunikationsnetze werden diesen in der Regel Header-Daten (kurz: Header) vorangestellt, die für den Transport des Datenpaketes in dem Kommunikationsnetz essentiell sind. Als Header bezeichnet man dabei den Teil des Datenpaketes, in dem keine Nutzdaten, sondern diverse Verwaltungsdaten enthalten sind, z.B. Adresse, Paketnummer, Senderkennung, Paketstatus sowie Daten zur Fehlererkennung bzw. zur Fehlerkorrektur (z.B. Checksumme CRC).

Bei schmalbandigen Datenströmen können diese Header-Daten ein Vielfaches der zu übertragenden Nutzdaten ausmachen. Für solche Datenströme, wie z.B. PPP Dial-Up-Verbindungen, werden deshalb häufig Header-Kompressionsverfahren eingesetzt. Eine Kompression der Header-Daten ist vor allem bei einer Übertragung über drahtlose Verbindungen erwünscht, da umfangreiche Header-Daten von IP-Protokollen teure Mobilfunkkanäle in besonderem Maße belasten.

IP ist für den verbindungslosen Transport von Daten von einem Sender über eines oder mehrere Kommunikationsnetze zu einem Empfänger zuständig, wobei keine Fehlererkennung oder - korrektur erfolgt. Dies bedeutet, IP kümmert sich nicht um schadhafte oder verloren gegangene Pakete. Die Abkürzung IP steht dabei für Internet Protocol, ein Protokoll der TCP/IP-Familie auf Schicht 3 des OSI-Referenzmodells. IP wird von mehreren in höheren Schichten des OSI-Referenzmodells liegenden Protokollen benutzt, hauptsächlich von TCP (Transfer Control Protocol), aber auch von UDP (User Datagram Protocol) .

Ein bekanntes Protokoll-Header-Kompressionsverfahren findet sich z.B. in S. Casner und V. Jacobson, "Compressing IP/UDP/RTP Headers for Low-speed Serial Links", Network Working Group, Request for Comments: 2508; (einsehbar im Internet unter http://www.ietf.org/rfc/rfc2508.txt?number=2508).

Dabei werden verschiedene Codierungen für unterschiedliche Protokolle vorgeschlagen. So erfolgt eine separate Codierung für RTP Header von end-to-end-Verbindungen, während im Falle einer link-to-link-Verbindung eine gemeinsame Komprimierung von RTP/UDP/IP Headern möglich ist.

Vorgesehen ist dabei eine Codierung mit drei verschiedenen Code-Stufen:
- ein kompletter Header (full header FH)
- eine differentielle Codierung erster Ordnung (first order difference FO), nämlich die Beschreibung zweier aufeinander folgender Header durch einen variablen Längencode und
- eine differentielle Codierung zweiter Ordnung (second order difference SO), also die Übertragung der Differenzen zweier FO-Header.

Für eine Komprimierung von TCP-Headern werden nach einmaligem Senden eines unkomprimierten Headers sich verändernde Felder durch eine differentielle Codierung beschrieben, um deren Größe zu reduzieren. Außerdem werden sich verändernde Felder komplett eliminiert, in dem Änderungen anhand der Länge eines Paketes berechnet werden. Dies beruht auf der Erkenntnis, dass etwa die Hälfte der Bytes in IP- und TCP-Headern für die Dauer eine Verbindung unverändert bleiben.

Nachteilig ist dabei unter anderem, dass diese bekannten Komprimierungsverfahren auf bestimmte Protokolle spezialisiert sind und nur für diese funktionieren. Für die verschiedenen Varianten der Codierung einzelner Protokolle oder mehrerer gemeinsam müssen jeweils verschiedene Encoder zur Verfügung stehen, was den Aufwand erhöht und sich negativ auf die Wirtschaftlichkeit auswirkt. Um diese neuen Protokolle komprimieren zu können, ist es erforderlich, neue Verfahren zu definieren, zu implementieren und die Netzwerkkomponenten zu aktualisieren.

Dokument WO 01/28180 offenbart ein Verfahren zur Header-Kompression, bei dem eine Synchronisation zwischen Sender und Empfänger durch zusätzliche Nachrichten vom Sender zum Empfänger sowie Acknowledgement-Nachrichten vom Empfänger zum Sender erreicht wird.

Andere Ansätze gehen ohne ein Vorwissen über die zu komprimierenden Protokolle an das Problem heran und betrachten ein Datenpaket, bestehend aus Header-Daten und Nutzdaten, als Byte- oder Bitstrom und codieren diesen differenziell. Diese Verfahren weisen unter anderem den Nachteil auf, dass die in den Header-Daten häufig auftretenden Checksummen eine hohe Entropie aufweisen und nicht oder kaum komprimierbar sind. Diese Header-Daten werden dabei immer übertragen und benötigen eine große Bandbreite, unabhängig von den zu übertragenden Nutzdaten.

Die Aufgabe der vorliegenden Erfindung besteht deshalb darin, eine Möglichkeit zur Komprimierung eines Bytestroms in einem Netzwerkprotokoll zu schaffen, die unabhängig vom jeweiligen Protokolltyp gleichermaßen effizient einsetzbar ist.

Diese Aufgabe wird mit dem Verfahren zum Übertragen eines Bytestroms von einer Sendeeinheit an eine Empfangseinheit in einem Netzwerkprotokoll gemäß den Merkmalen des Patentanspruches 1 sowie mit einem Encoder gemäß dem Patentanspruch 11, einem Decoder gemäß dem Patentanspruch 12, einer Sendeeinheit gemäß dem Patentanspruch 13 sowie einer Empfangseinheit gemäß dem Patentanspruch 14 gelöst.

Gemäß der vorliegenden Erfindung weist das Verfahren die Schritte auf: Entfernen zumindest eines Datenbereiches des Bytestroms aus dem Bytestrom; Übertragen von Informationen, welcher Datenbereich oder welche Datenbereiche aus dem Bytestrom entfernt wurden und/oder auf welche Weise der gekürzte Bytestrom weiterzuverarbeiten ist, an die Empfangseinheit; und Übertragen des um den zumindest einen Datenbereich gekürzten Bytestroms an die Empfangseinheit, die aus den Informationen und dem gekürzten Bytestrom den zumindest einen von der Sendeeinheit entfernten Datenbereich ermittelt und weiterverarbeitet.

Die entfernten Datenbereiche stellen bevorzugt Header-Daten und/oder Daten zur Fehlererkennung bzw. zur Fehlerkorrektur eines Datenpaketes dar. In einem Bytestrom sind dies diejenigen Datenbereiche, die die höchste Entropie aufweisen und dadurch durch ein Kompressionsverfahren nur unzulänglich in ihrer Größe reduziert werden können.

Mit anderen Worten liegt der Erfindung das Prinzip zugrunde, Datenbereiche mit hoher Entropie aus dem zunächst vollständigen Bytestrom zu entfernen. Der gekürzte Bytestrom kann dann vorteilhafterweise mittels eines universellen Kompressionsverfahrens ohne Angabe eines zu verwendenden Kommunikationsprotokolls komprimiert und übertragen werden.

Die in den entfernten Datenbereichen enthaltenen Daten bzw. Informationen können für die Empfangseinheit von hoher Relevanz sein und müssen ihr dann auf andere Weise zur Verfügung gestellt werden. Hierzu werden diese in einer der Empfangseinheit bekannten Weise, vorzugsweise differentiell, codiert und der Empfangseinheit entweder in einer separaten Nachricht, einer Signalisierungsnachricht, oder zusammen mit dem gekürzten Bytestrom zugeführt. Die Empfangseinheit ist dadurch in Lage versetzt, die entfernten Datenbereiche aufgrund der ihr bekannten Codierung zu rekonstruieren und an der ursprünglichen Position in dem Bytestrom wieder einzufügen.

Der Begriff "Einfügen" bedeutet dabei nicht notwendigerweise, dass die rekonstruierten Daten an der ursprünglichen Position des gekürzten Bytestroms eingefügt werden. Vielmehr ist die Position der rekonstruierten Daten in dem Bytestrom ganz allgemein frei wählbar.

Die Empfangseinheit kann die Informationen, welcher Datenbereich oder welche Datenbereiche aus dem Bytestrom entfernt wurden auch lediglich auf deren Korrektheit überprüfen und den gekürzten Bytestrom gegebenenfalls ohne Einfügen der rekonstruierten Daten weiterverarbeiten.

Sofern an die Empfangseinheit Informationen übertragen werden, auf welche Weise der gekürzte Bytestrom weiter zu verarbeiten ist, könnte auf eine Rekonstruktion des entfernten Datenbereichs verzichtet werden und eine direkte Weiterverarbeitung des gekürzten Bytestroms erfolgen. Anwendungsbezogen könnte dies ein Wechsel des Übertragungsprotokolls durch die Empfangseinheit darstellen.

In der Signalisierungsnachricht werden die entfernten Datenbereiche nicht einfach komprimiert. Die Signalisierungsnachricht enthält lediglich Informationen, auf welche Weise die Informationen der entfernten Datenbereiche rekonstruiert werden können. Die an die Empfangseinheit übertragene Information weist vorzugsweise eine Angabe über die Position und/oder die Länge und/oder die Art des Zusammenhangs über einen jeweiligen entfernten Datenbereich auf. Die Signalisierungsnachricht selbst kann deshalb gegenüber den entfernten Datenbereichen mit sehr viel weniger Informationen auskommen und darüber hinaus auch einem Kompressionsverfahren unterzogen werden.

Gemäß einer vorteilhaften Ausgestaltung erfolgt das Entfernen des zumindest einen Datenbereichs aus dem Bytestrom sowie das Ermitteln des zumindest einen gekürzten Datenbereichs aus der Signalisierungsnachricht und dem gekürzten Bytestrom mittels eines vorgegebenen Algorithmus. Das Entfernen des zumindest einen Datenbereichs erfolgt somit mittels eines vorgegebenen Algorithmus, der auch der Empfangseinheit bekannt ist. Der Algorithmus ist derart ausgestaltet, dass nur solche Datenbereiche entfernt werden, die sich ausschließlich aus dem späteren gekürzten Bytestrom rekonstruieren lassen. Dies versetzt die Empfangseinheit in die Lage, bei Kenntnis des verwendeten Algorithmus und bestimmter weiterer Informationen, wie die Position, die Länge und die Art des Zusammenhangs über einen jeweiligen entfernten Datenbereich, diesen oder diese aus dem gekürzten Bytestrom und der die genannten Informationen beinhaltenden Signalisierungsnachricht zu rekonstruieren.

Zweckmäßigerweise erfolgt vor dem Entfernen des zumindest eines Datenbereichs der Schritt des Ermittelns entfernbarer Datenbereiche. Dies ergibt sich unmittelbar aus dem oben Gesagten, da lediglich solche Datenbereiche durch die Sendeeinheit dem Bytestrom entfernt werden können, die sich allein aus dem gekürzten Bytestrom und der Angabe weiterer Informationen rekonstruieren lassen.

In einer weiteren Ausgestaltung umfasst das Ermitteln entfernbarer Datenbereiche das Durchsuchen aller möglichen Header-Positionen und -Längen unter Verwendung zumindest eines Algorithmus. Hierbei wird auf bereits bekanntes Wissen zurückgegriffen, an welchen Positionen Header-Daten bevorzugt angeordnet werden. Die Ausgestaltung von Header-Daten unterliegt gewissen Regeln, so dass in der Regel auch die üblichen, verwendeten Header-Längen (z.B. 16 Bit oder 32 Bit) bekannt sind und durch den Algorithmus berücksichtigt werden können.

Der erfindungsgemäße Encoder ist zur Bearbeitung eines Bytestroms in Netzwerkprotokollen gemäß dem oben genannten Verfahren eingerichtet.

Der erfindungsgemäße Decoder ist dazu eingerichtet, aus einer Signalisierungsnachricht und einem gekürzten Bytestrom den ursprünglichen, ungekürzten Bytestrom zu rekonstruieren.

Weitere Vorteile und Details der Erfindung ergeben sich anhand der nachfolgenden umfassenden Darstellung der Figur.

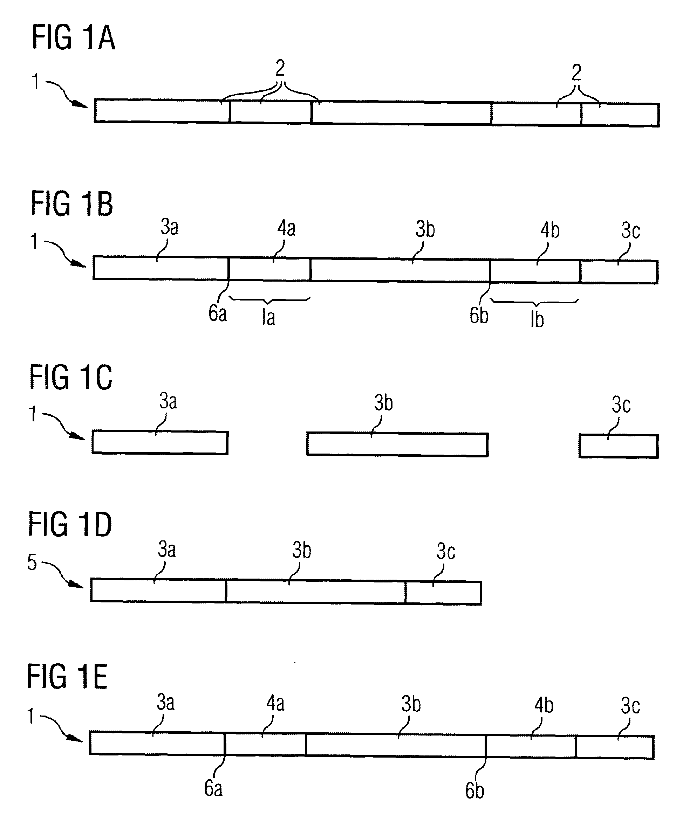

Ein von einer Sendeeinheit an eine Empfangseinheit zu übertragender Bytestrom 1 ist in Figur 1a dargestellt. Der Bytestrom 1 setzt sich aus einer Folge von Datenbereichen 2 zusammen, die entweder Nutzdaten oder Header-Daten darstellen. Vor dem Versenden des Bytestroms 1 an eine Empfangseinheit versucht die Sendeeinheit, möglichst viele der Datenbereiche 2 in dem Bytestrom 1 zu bestimmen, die durch einen algorithmischen Zusammenhang aus den verbleibenden Datenbereichen des Bytestroms rekonstruierbar sind. Bei dem vorgeschlagenen Verfahren verfügen die Sendeeinheit und die Empfangseinheit über eine Vielzahl an möglichen Algorithmen, durch die Datenbereiche, insbesondere Header-Felder, aus den übrigen Daten des als Bytestrom vorliegenden Datenpaketes erkannt bzw. rekonstruiert werden können.

Die Suche nach Header-Daten, für die ein solcher algorithmischer Zusammenhang besteht, könnte z.B. mittels eines Brute-Force-Algorithmus erfolgen, der alle möglichen Header-Anfangspositionen, -Längen unter Verwendung der in der Sendeeinheit gespeicherten Algorithmen durchsucht.

Sind solche Informationen über den Beginn und die Länge von Header-Feldern nicht bekannt, so kann von sich stark ändernden Header-Bereichen ausgegangen werden, wobei diese Bereiche als mögliche Kandidaten für einen algorithmischen Zusammenhang betrachtet werden können.

In Figur 1b sind Datenbereiche, die sich mittels eines algorithmischen Zusammenhangs rekonstruieren lassen (und damit Header-Daten und/oder Daten zur Fehlererkennung bzw. zur Fehlerkorrektur eines Datenpaketes darstellen), mit den Bezugszeichen 4a und 4b gekennzeichnet. Datenbereiche, deren Informationen Nutzdaten darstellen, sind mit den Bezugszeichen 3a, 3b und 3c gekennzeichnet. Die Datenbereiche 4a, 4b zeichnen sich somit dadurch aus, dass diese mittels eines der Sendeeinheit und der Empfangseinheit bekannten Algorithmus aus den verbleibenden Datenbereichen 3a, 3b, 3c rekonstruiert werden können.

Im nächsten Verfahrensschritt (Figur 1c) werden die Datenbereiche 4a, 4b aus dem Bytestrom 1 entfernt, so dass der in Figur 1d gezeigte gekürzte Bytestrom 5 resultiert.

Bevorzugt vor, jedoch auch nach, dem Übertragen des gekürzten Bytestroms 5 wird von der Sendeeinheit eine Signalisierungsnachricht an die Empfangseinheit übermittelt, welche Informationen enthält, mit welchem Algorithmus die entfernten Datenbereiche 4a, 4b aus den Informationen des gekürzten Bytestroms 5 rekonstruiert werden können. Als weitere Information wird der Empfangseinheit mitgeteilt, an welchen Positionen (Bezugszeichen 6a, 6b in Figur 1b und 1e) die rekonstruierten Datenbereiche wieder eingefügt werden müssen.

Aus diesen Informationen ist die Sendeeinheit in der Lage, den ursprünglichen, ungekürzten Bytestrom 1 zu rekonstruieren, wie er in Figur 1e dargestellt ist.

Der Vorteil des erfindungsgemäßen Verfahrens besteht darin, dass der gekürzte Bytestrom 5 einem universellen Kompressionsverfahren unterzogen werden kann, wie dies beispielsweise in der WO 02/09386 A1 dargestellt ist. Der zu komprimierende gekürzte Bytestrom umfasst vor dessen Komprimierung keinerlei Informationen mit hoher Entropie mehr. Da lediglich solche Datenbereiche aus dem Bytestrom entfernt werden, die sich algorithmisch aus den verbleibenden, zu übertragenden Daten (dies ist der gekürzte Bytestrom 5) rekonstruieren lassen, kann auf eine direkte Übertragung dieser Daten mit hoher Entropie verzichtet werden. Stattdessen werden lediglich diejenigen Informationen übermittelt, mittels denen die Empfangseinheit in die Lage versetzt wird, die entfernten Datenbereiche zu rekonstruieren und an den angegebenen Positionen neu einzusetzen.

Bei den zu entfernenden Datenbereichen handelt es sich bevorzugt um Header-Daten und/oder Daten zur Fehlererkennung bzw. zur Fehlerkorrektur eines Datenpaketes. Dies bedeutet, der gekürzte Bytestrom enthält keinerlei Informationen mehr, anhand denen eine korrekte Übertragung durch die Empfangseinheit verifiziert werden kann. Es wird bewusst auf die Übermittlung solcher Daten, wie z.B. einer Checksumme CRC verzichtet, da davon ausgegangen wird, dass die erste Schicht des OSI-Referenzmodells eine fehlerfreie Übertragung des Datenpaketes garantiert. Im Umkehrschluss bedeutet dies, dass Mechanismen zur Überprüfung der fehlerfreien Datenübertragung auf einer Schicht 2 oder einer höheren Schicht des OSI-Referenzmodells nicht unbedingt notwendig sind.

Das erfindungsgemäße Verfahren zeichnet sich auch insbesondere dadurch aus, dass in dem zu versendenden, gekürzten Bytestrom keinerlei Informationen über das verwendete Protokoll enthalten sind. Dies bedeutet, dass das erfindungsgemäße Verfahren universell, unabhängig von den Gegebenheiten der Sende- bzw. Empfangseinheiten und deren eventuellen technischen Änderungen eingesetzt werden kann.

Die Effizienz universeller Header-Kompressions-Verfahren wird durch die Erfindung weiter gesteigert. Hierdurch sinkt der Overhead durch Netzwerkprotokolle, wodurch im Gegenzug der Anteil der Datenrate, der für Nutzdaten zur Verfügung steht, ansteigt. Dies ermöglicht z.B. kürzere Download-Zeiten oder bessere Audio- und Videoqualitäten über paketorientierte Kommunikationsnetze.

Das erfindungsgemäße Verfahren könnte in einem Router eingesetzt werden, der zu entfernende Header-Daten auffindet und die Richtigkeit der Datenpakete auf Schicht 1 des OSI-Referenzmodells überprüfen kann, bevor die eigentliche Weiterleitung an die Empfangseinheit erfolgt. Fehlerhafte Datenpakete könnten auf diese Weise von einer Weiterleitung bereits an dieser Stelle ausgeschlossen werden, wodurch das Kommunikationsnetz entlastet wäre. Dies kann ohne explizites Wissen über die verwendeten Protokolle stattfinden, wodurch auch für geänderte Hardware oder geänderte Protokolle eine Eignung vorliegt.

## Patentansprüche

1. Verfahren zum Übertragen eines Bytestroms (1) von einer Sendeeinheit an eine Empfangseinheit in einem Netzwerkprotokoll mit den Schritten:
Entfernen zumindest eines Datenbereichs (4a,4b) des Bytestroms (1) aus dem Bytestrom,
Übertragen von Informationen, welcher Datenbereich (4a,4b) oder welche Datenbereiche (4a,4b) aus dem Bytestrom (1) entfernt wurden und/oder auf welche Weise der gekürzte Bytestrom weiterzuverarbeiten ist, an die Empfangseinheit,
Übertragen des um den zumindest einen Datenbereich (4a,4b) gekürzten Bytestroms (5) an die Empfangseinheit, die aus den Informationen und dem gekürzten Bytestrom den zumindest einen von der Sendeeinheit entfernten Datenbereich ermittelt und weiterverarbeitet **dadurch gekennzeichnet, dass**
vor dem Entfernen des zumindest einen Datenbereichs (4a,4b) der Schritt des Ermittelns entfernbarer Datenbereiche erfolgt.

2. Verfahren zum Übertragen eines Bytestroms nach Anspruch 1,
**dadurch gekennzeichnet, dass**
die Informationen, welcher Datenbereich (4a,4b) oder welche Datenbereiche (4a,4b) aus dem Bytestrom (1) entfernt wurden und/oder auf welche Weise der gekürzte Bytestrom weiterzuverarbeiten ist, in einer Signalisierungsnachricht an die Empfangseinheit übertragen werden.

3. Verfahren zum Übertragen eines Bytestroms nach Anspruch 1 oder 2,
**dadurch gekennzeichnet, dass**
die Informationen, welcher Datenbereich (4a,4b) oder welche Datenbereiche (4a,4b) aus dem Bytestrom (1) entfernt wurden und/oder auf welche Weise der gekürzte Bytestrom weiterzuverarbeiten ist, vor dem Übertragen an die Empfangseinheit differentiell codiert werden.

4. Verfahren zum Übertragen eines Bytestroms nach einem der vorhergehenden Ansprüche,
**dadurch gekennzeichnet, dass**
das Weiterverarbeiten der Informationen und des gekürzten Bytestroms durch die Empfangseinheit die Überprüfung der Korrektheit des gekürzten Bytestroms umfasst.

5. Verfahren zum Übertragen eines Bytestroms nach einem der vorhergehenden Ansprüche,
**dadurch gekennzeichnet, dass**
das Weiterverarbeiten der Informationen und des gekürzten Bytestroms durch die Empfangseinheit das Einfügen des entfernten Datenbereichs in den gekürzten Bytestrom umfasst, um den ursprünglichen, ungekürzten Bytestrom (1) wiederherzustellen.

6. Verfahren zum Übertragen eines Bytestroms nach einem der vorhergehenden Ansprüche,
**dadurch gekennzeichnet, dass**
das Entfernen des zumindest einen Datenbereichs (4a,4b) aus dem Bytestrom (1) sowie das Ermitteln des zumindest einen gekürzten Datenbereichs aus der Signalisierungsnachricht und dem gekürzten Bytestrom mittels eines vorgegebenen Algorithmus erfolgt.

7. Verfahren zum Übertragen eines Bytestroms nach einem der vorhergehenden Ansprüche,
**dadurch gekennzeichnet, dass**
die Informationen eine Angabe über die Position und/oder die Länge und/oder die Art des Zusammenhangs über einen jeweiligen entfernten Datenbereich enthalten.

8. Verfahren zum Übertragen eines Bytestroms nach einem der vorhergehenden Ansprüche,
**dadurch gekennzeichnet, dass**
die entfernten Datenbereiche Header-Daten und/oder Daten zur Fehlererkennung bzw. zur Fehlerkorrektur eines Datenpakets darstellen.

9. Verfahren zum Übertragen eines Bytestroms nach einem der vorhergehenden Ansprüche,
**dadurch gekennzeichnet, dass**
das Übertragen des gekürzten Bytestroms (5) mittels eines universellen Kompressionsverfahrens ohne Angabe eines zu verwendenden Kommunikationsprotokolls erfolgt.

10. Verfahren zum Übertragen eines Bytestroms nach Anspruch 6,
**dadurch gekennzeichnet, dass**
das Ermitteln entfernbarer Datenbereiche das Durchsuchen aller möglichen Header-Positionen, -Längen unter Verwendung zumindest eines Algorithmus umfasst.

11. Encoder der zur Bearbeitung eines Bytestroms in Netzwerkprotokollen nach einem der Ansprüche 1 bis 10 eingerichtet ist.

12. Decoder zur Bearbeitung eines nach einem der Ansprüche 1 bis 10 bearbeiteten Bytestroms in Netzwerkprotokollen, der eingerichtet ist, aus der Signalisierungsnachricht und dem gekürzten Bytestrom den ursprünglichen, ungekürzten Bytestrom zu rekonstruieren.

13. Sendeeinheit mit einem Encoder nach Anspruch 11.

14. Empfangseinheit mit einem Decoder nach Anspruch 12.

## Claims

1. Method for transmitting a byte stream (1) from a transmitter unit to a receiver unit in a network protocol with the following steps:
Removal of at least one data area (4a, 4b) of the byte stream (1) from the byte stream,
Transmission to the receiving unit of information relating to which data area (4a, 4b) or which data areas (4a, 4b) have been removed from the byte stream (1) and/or relating to the way in which the shortened byte stream is to be further processed,
Transmission of the byte stream (5) shortened by the at least one data area (4a, 4b) to the receiver unit, which, from the information and the shortened byte stream, determines and further processes the at least one data area removed by the transmitter unit, **characterized in that**,
before the at least one data area (4a, 4b) is removed the step of determining removable data areas is performed.

2. Method for transmitting a byte stream in accordance with claim 1,
**characterized in that**,
the information relating to which data area (4a, 4b) or which data areas (4a, 4b) has or have been removed from the byte stream (1) and/or to the way in which the shortened byte stream is to be further processed is transferred in a signalling message to the receiver unit.

3. Method for transmitting a byte stream in accordance with claim 1 or 2,
**characterized in that**,
the information relating to which data area (4a,4b) or which data areas (4a,4b) has or have been removed from the byte stream (1) and/or to the way in which the shortened byte stream is to be further processed is encoded differentially at the transmission unit prior to transmission.

4. Method for transmitting a byte stream in accordance with one of the previous claims,
**characterized in that**,
the further processing of the information and of the shortened byte stream by the receiver unit comprises checking the correctness of the shortened byte stream.

5. Method for transmitting a byte stream in accordance with one of the previous claims,
**characterized in that**,
the further processing of the information and of the shortened byte stream by the receiver unit comprises insertion of the removed data areas into the shortened byte stream to restore the original unshortened byte stream (1).

6. Method for transmitting a byte stream in accordance with one of the previous claims,
**characterized in that**,
the at least one data area (4a, 4b) is removed from the byte stream (1) and the at least one shortened data area is determined from the signalling message and the shortened byte stream by means of a prespecified algorithm.

7. Method for transmitting a byte stream in accordance with one of the previous claims,
**characterized in that**,
the information contains an entry about the position and/or the length and/or the type of the relationship relating to a data area removed in each case.

8. Method for transmitting a byte stream in accordance with one of the previous claims,
**characterized in that**,
the removed data areas represent header data and/or data for error detection or error correction of a data packet.

9. Method for transmitting a byte stream in accordance with one of the previous claims,
**characterized in that**,
the shortened byte stream (5) is transmitted by means of a universal compression method without specifying the communication protocol to be used.

10. Method for transmitting a byte stream in accordance with claim 6,
**characterized in that**,
determining the removable data areas comprises searching through all possible header positions, lengths using at least one algorithm.

11. Encoder which is set up for processing a byte stream in network protocols in accordance with one of the claims 1 to 10.

12. Decoder for processing a byte stream processed in accordance with one of the claims 1 to 10 in network protocols which is set up to reconstruct the original unshortened byte stream from the signalling message and the shortened byte stream.

13. Transmitter unit with an encoder in accordance with claim 11.

14. Receiver unit with a decoder in accordance with claim 12.

## Revendications

1. Procédé de transmission d'un flux d'octets (1) d'une unité émettrice à une unité réceptrice dans un protocole de réseau, comprenant les étapes :
suppression d'au moins une section de données (4a, 4b) appartenant au flux d'octets (1) du flux d'octets,
transmission à l'unité réceptrice d'informations indiquant quelle section de données (4a, 4b) ou quelles sections de données (4a, 4b) a/ont été supprimée/s du flux d'octets (1) et/ou la manière dont le flux d'octets raccourci doit être traité,
transmission du flux d'octets raccourci (5) de l'au moins une section de données (4a, 4b) à l'unité réceptrice qui, à partir des informations et du flux d'octets raccourci, détermine l'au moins une section de données supprimée par l'unité émettrice et la traite, **caractérisé en ce que**
l'étape de détermination de sections de données pouvant être supprimées est exécutée avant la suppression de l'au moins une section de données (4a, 4b).

2. Procédé de transmission d'un flux d'octets selon la revendication 1,
**caractérisé en ce que**
les informations indiquant quelle section de données (4a, 4b) ou quelles sections de données (4a, 4b) a/ont été supprimée/s du flux d'octets (1) et/ou la manière dont le flux d'octets raccourci doit être traité sont transmises à l'unité réceptrice dans un message de signalisation.

3. Procédé de transmission d'un flux d'octets selon la revendication 1 ou 2,
**caractérisé en ce que**
les informations indiquant quelle section de données (4a, 4b) ou quelles sections de données (4a, 4b) a/ont été supprimée/s du flux d'octets (1) et/ou la manière dont le flux d'octets raccourci doit être traité font l'objet d'un codage différentiel avant la transmission à l'unité réceptrice.

4. Procédé de transmission d'un flux d'octets selon l'une des revendications précédentes,
**caractérisé en ce que**
le traitement des informations et du flux d'octets raccourci par l'unité réceptrice comprend la vérification de la justesse du flux d'octets raccourci.

5. Procédé de transmission d'un flux d'octets selon l'une des revendications précédentes,
**caractérisé en ce que**
le traitement des informations et du flux d'octets raccourci par l'unité réceptrice comprend l'insertion de la section de données supprimée dans le flux d'octets raccourci pour recréer le flux d'octets original non raccourci (1).

6. Procédé de transmission d'un flux d'octets selon l'une des revendications précédentes,
**caractérisé en ce que**
la suppression de l'au moins une section de données (4a, 4b) du flux d'octets (1) et la détermination de l'au moins une section de données raccourcie à partir du message de signalisation et du flux d'octets raccourci s'effectuent au moyen d'un algorithme prédéfini.

7. Procédé de transmission d'un flux d'octets selon l'une des revendications précédentes,
**caractérisé en ce que**
les informations contiennent une indication sur la position et/ou la longueur et/ou le type de la relation concernant une section de données supprimée respective.

8. Procédé de transmission d'un flux d'octets selon l'une des revendications précédentes,
**caractérisé en ce que**
les sections de données supprimées représentent des données d'en-tête et/ou des données pour la détection d'erreurs resp. pour la correction d'erreurs d'un paquet de données.

9. Procédé de transmission d'un flux d'octets selon l'une des revendications précédentes,
**caractérisé en ce que**
la transmission du flux d'octets raccourci (5) se fait au moyen d'un procédé de compression universel sans indication d'un protocole de communication à utiliser.

10. Procédé de transmission d'un flux d'octets selon la revendication 6,
**caractérisé en ce que**
la détermination de sections de données pouvant être supprimées comprend la recherche de toutes les positions et longueurs d'en-tête possibles à l'aide d'au moins un algorithme.

11. Codeur configuré pour traiter un flux d'octets dans des protocoles de réseau selon l'une des revendications 1 à 10.

12. Décodeur pour traiter un flux d'octets traité selon l'une des revendications 1 à 10 dans des protocoles de réseau, qui est configuré pour reconstruire le flux d'octets original non raccourci à partir du message de signalisation et du flux d'octets raccourci.

13. Unité émettrice comprenant un codeur selon la revendication 11.

14. Unité réceptrice comprenant un décodeur selon la revendication 12.
